# EUROPEAN PATENT APPLICATION

(11) **EP 1 182 583 A2**
(43) Date of publication of application: **27.02.2002**
(21) Application number: 01118774.7
(22) Date of filing: 08.08.2001
(51) Int. Cl.: G06F 17/30

(54) **System and method for transmitting data over computer networks**

(30) Priority: 23.08.2000 SM 20000028
(71) Applicant: DJ'S Gang S.r.l. Unipersonale, 20123 Milano (IT)
(72) Inventor: Cecchetto, Claudio, 20148 Milano (IT)
(74) Representative: Modiano, Guido, Dr.-Ing.

(57) **Abstract**

A system for transmitting data over computer networks which comprises: data processing means;
storage means controlled by the data processing means;
modulation/demodulation means suitable to provide a connection of the data processing means to a data network;
data entry means and data display means;
its particularity consisting in that the storage means comprise a temporary data structure which is suitable to store information related to at least one Web page to be played back subsequently, either online and offline; and
means for generating a data file which is suitable to be stored in the memory means and to contain the information related to the at least one Web page.

## Description

The present invention relates to a system and a method for transmitting data over computer networks.

As is known, the ever-increasing growth of the Internet has led an increasingly large number of people to access information-technology media.

Alongside the increasing growth of the Internet, interpersonal communication has also grown by using as a tool the data network known as the Internet and particularly the electronic mail provided thereby.

One of the problems encountered by users of a computer network such as the Internet is finding their way through a myriad sites, each composed of multiple Web pages, in order to find the site they are interested in and thus access the desired information.

The exponential growth of the number of sites has brought about the parallel growth of powerful search engines, which by using keywords chosen appropriately by the user allow to direct the user to a list of sites in which the requested keywords are present.

However, a focused search is often very difficult to perform and above all it takes a considerable time.

Accordingly, the result of a computer network search which essentially consists of a collection of addresses of Web pages that define the path followed by the user in conducting the search is a wealth of data which is currently inevitably lost at the end of the search.

This occurs both for the user who conducted the search and for any users to whom the user who performed the search might want to report the search path that he followed.

The user who performed the search is in fact generally capable of reporting to another user only the final address that he has reached; this address may indeed contain information which is important for the search, but it may also be only one of the fundamental addresses that the user visited during his search.

Accordingly, current technology does not allow to send to third parties a list of addresses that constitute the followed search path, for example using e-mail as a transmission medium.

The aim of the present invention is to provide a system and a method for transmitting data over computer networks which allows to store the search paths followed by a user while navigating the network and to fully report them to third parties.

Within this aim, an object of the present invention is to provide a system and a method for transmitting data over computer networks which allow the user who receives the search path followed by another user to view the Web pages that the first user viewed during his search.

Another object of the present invention is to provide a system and a method for transmitting data over computer networks which allows to define a Web page viewing time for each one of the Web pages visited during navigation by another user.

Another object of the present invention is to provide a system and a method for transmitting data over computer networks which allows the user who performed the data search on the computer network to subsequently review the followed search path and to view all the previously opened Web pages.

Another object of the present invention is to provide a system and a method for transmitting data over computer networks which are highly reliable, relatively simple to provide and at competitive costs.

This aim and these and other objects which will become better apparent hereinafter are achieved by a system for transmitting data over computer networks which comprises:
data processing means;
storage means controlled by said data processing means;
modulation/demodulation means suitable to provide a connection of said data processing means to a computer network;
data entry means and data display means;
   characterized in that said storage means comprise a temporary data structure which is suitable to store information related to at least one Web page to be played back subsequently, either online and offline; and
means for generating a data file which is suitable to be stored in said storage means and to contain said information related to said at least one Web page.

This aim and these objects are also achieved by a method for transmitting data over computer networks, characterized in that it comprises the steps that consist in:
opening a file which allows to store and subsequently read Web pages either online and offline;
opening Web pages online;
temporarily storing said open Web pages; and
saving the file with the stored Web pages.

Further characteristics and advantages of the invention will become better apparent from the description of preferred but not exclusive embodiments of the system and method according to the present invention, illustrated only by way of non-limitative examples in the accompanying drawings, wherein:
Figure 1 is a flowchart of a step of initializing the data transmission system according to the present invention;
Figure 2 is a flowchart of the process for saving Web pages by the method according to the present invention;

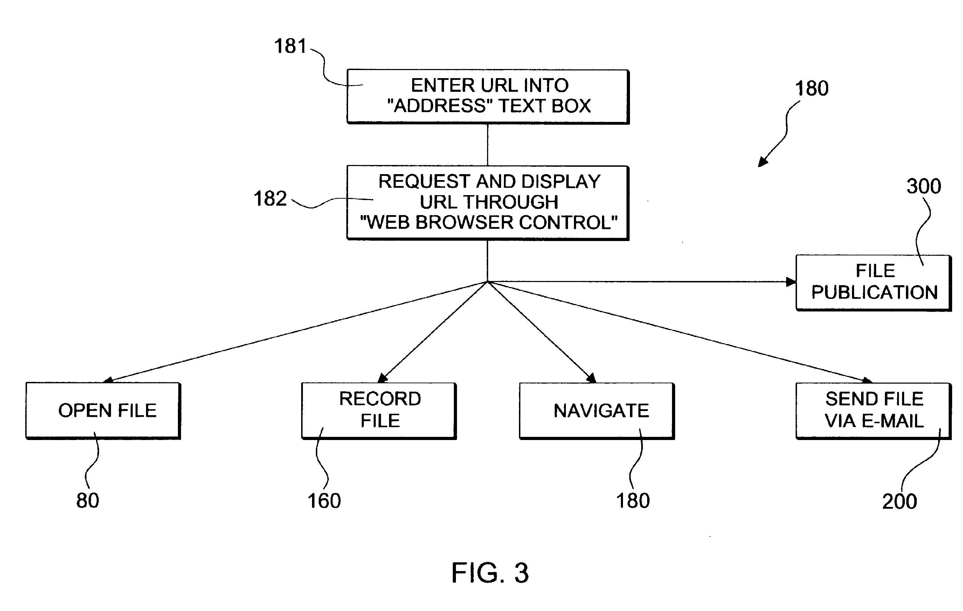

Figure 3 is a flowchart of a navigation step in the method according to the present invention; and
Figure 4 is a flowchart of the transmission, via e-mail, of a file generated by means of the system and the method according to the present invention.

With reference to the figures, the system according to the present invention allows to record a sequence, which can optionally be ordered in a logical manner, of a series of Web pages in addition to other multimedia elements that can be normally visualized by means of a Web browser.

Essentially, the system allows to create a file which contains the addresses of the pages and/or of the elements of said Web pages.

Such file can be saved on a local disk or alternatively on another storage medium accessible from the user's terminal. The file generated by the user, by recording the addresses of the pages and/or the elements of said pages, can be saved for example on the local disk by modifying some of the values and individual pages that constitute it, such as for example the title and the descriptive comment, while deciding which pages to include or not in the final sequence of the generated file.

It is also possible to indicate the name of the author of the file and other parameters, such as the e-mail address and the address of the author's personal website, if any.

The generated file of Web pages and/or addresses can be loaded from the local disk and, once opened and checked for the formal validity of its content, can be played back automatically. The automatic playback of the file can occur in both directions, by setting a loading time between a page and the subsequent one by means of an appropriate key or by means of menus provided to control the page loading speed. The time count begins at the end of the loading of the page. Once the end of the file has been reached, playback restarts from the beginning. Essentially, it is possible to load pages both "forward" and "backward".

It is also possible to stop automatic playback by pressing a pause key or one of the manual visualization keys (forward/backward).

Manual loading is possible by using for instance the function keys on the upper portion of the keyboard or by using specifically adapted Menus. In the manual mode, the timer used for automatically scrolling the pages is disabled.

The main menu classifies the pages constituting the file through a list from which they can be individually retrieved.

The file generated with the Web pages and/or addresses comprises a list which is suitable to visualize all the addresses and/or pages contained in the file and by means of which it is possible to individually retrieve the addresses and/or pages.

At any time during the playback of the file, it is possible to navigate to other pages by using the links contained in the pages or by typing in a new address which one wishes to access selected from the addresses listed in the list of Web pages and/or addresses contained in the generated file.

The file with the addresses allows the user to navigate within said file, viewing the pages thereof to which the addresses or pages stored directly in the file refer, or to perform a conventional "navigation", by typing in a new address which the user wishes to access.

The pages stored in the file of Web pages and/or addresses can be visualized online, by connecting to the computer network, or offline, by displaying the pages from the cache memory of the terminal on which the file is loaded, of course if said pages have already been visited before being saved in the address and/or Web page file.

All the pages displayed on the screen can be printed and it is possible to send the file thus generated via e-mail, so that the recipient receives the file with the list of Web pages and/or addresses visited by the first user, thus being able to follow the navigation path traced by the first user.

The program can be customized by using preset functions or by providing a customized version of the graphic skins defining the graphical appearance of the application.

In addition, the first level links can be collected for any page visualized by the program. Starting from the created list, a temporary file can be created to be displayed in one of the available modes (Manual, Automatic).

Furthermore, besides the addresses of the pages of the file, also the visualized contents can be stored and subsequently reproduced. The file created contains all the elements which allow its storing gathered in a single file.

The file created in the centralized database of the reference web-site can be published directly from the program without the need of accessing the web-site.

It is also possible to integrate the standard functions of an Mp3 player and a radio via the web and also to implement a system for pre-loading the web-pages to make navigation of the file quicker.

The system according to the present invention comprises data archiving means which are conveniently constituted by a temporary data structure (data array) in which the information required for subsequent playback of a Web page is stored whenever the user displays said Web page.

In particular, the information required to play back a Web page are:
the title of the Web page;
the address of the Web page;
the number of frames, if any, of which it is composed;
   the address of the various frames; and
   the name of the various frames.

When page storage is required, this information is archived in the temporary data structure to be used when the complete file is saved. Before saving, confirmation of the previously gathered data is requested, allowing the option to modify some of them (for example the title of the Web page) and to add subsequent fields (for example the description and comment to the Web page).

The fields that form the general descriptive data of the file can be, by way of example:
file ID;
author's name;
author's e-mail address;
author's personal URL;
file creation date;
file modification date;
number of Web pages contained in the file.

Some of these data can be modified before saving (for example the title of the file, the name of the author, the author's e-mail address, the author's personal URL).

These data, together with general descriptive data of the file, are written in a sequential file in which the first record contains the general descriptive data while the subsequent records contain the information for playing back the saved Web pages (data related to the pages).

The method according to the present invention therefore provides an initial procedure of checking the version and the validity of the license of the file that allows to store Web pages and/or addresses according to the invention.

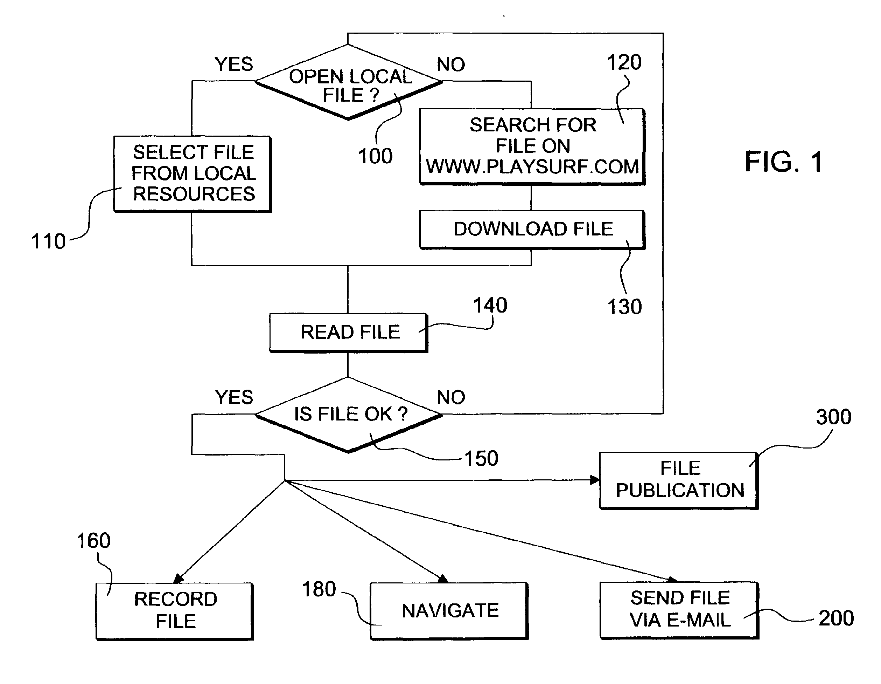

This preliminary step is followed by the step, designated by the reference numeral 100 and shown in Figure 1, in which the file is opened. During this step, the file is checked to determine whether it is a local file, i.e., a file stored on a local resource, step 110, or it is stored on a website, step 120. If the file is stored on a website or attached to an e-mail message, it is downloaded, step 130, or executed from its original location. This is followed by a step 140 of reading the file. If the file is executed directly without prior downloading, this opens a copy of the program which automatically receives as input the content of the file and then moves on to the reading step 140.

The step 140 is followed by a step 150 in which the correctness of the file is checked.

If this check fails, the process returns to the file opening step 100. If it is successful, the process moves on to the step 160 for recording the data in the file, or to the navigation step 180 and alternatively to a step 200 for sending the file via e-mail.

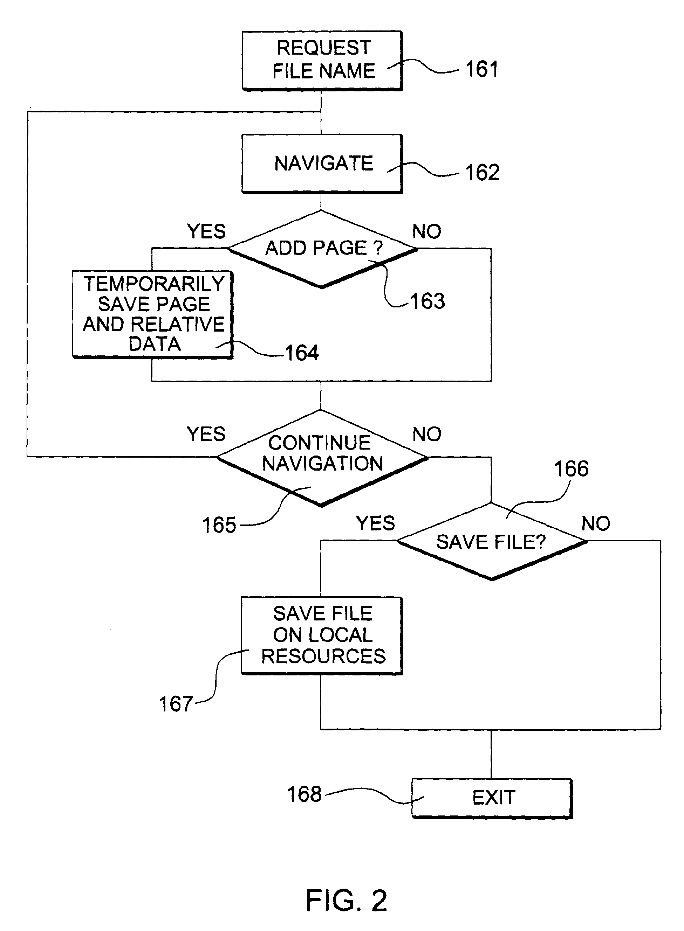

The step 160, shown in detail in its component steps in Figure 2, provides for a step 161 of requesting the name of the file, followed by a navigation step 162 performed by the user on the computer network, which is followed by a step 163 on which the user is asked whether he wishes or not to add a Web page to the list of pages that the file generates.

If a positive reply is given, this is followed by a step 164 in which the page and the data related to the page are saved temporarily, and then by a step 165 in which the user is asked whether he wishes to continue his navigation or not. The step 165 is also reached directly from the step 163 if the user does not wish to add a new page to the list of pages of the file.

From the step 165, the user has the option to continue his navigation, in which case he returns to the step 162, or to end it, in which case the process moves on to a step 166 in which a request is issued to save the file thus generated with Web pages and/or addresses recorded by the user.

If the user wishes to save the file thus generated, a step 167 follows for saving the file on local resources; this is followed by an exit step 168. The exit step 168 is also reached directly from the step 166 when the user does not wish to save the file thus generated.

The navigation step 180 instead entails a step 181 for entering the address of a website in an "address" text box.

The step 181 is followed by a step 182 of requesting the address and displaying it.

This is followed either by the step of opening the file, designated by the reference numeral 80 and generally described in Figure 1, or by the step 160 of recording performed on the Web page and/or address file, or by the navigation step 180 or alternatively by the step 200 for sending the file by e-mail, or else by the step 300 of publishing the file created.

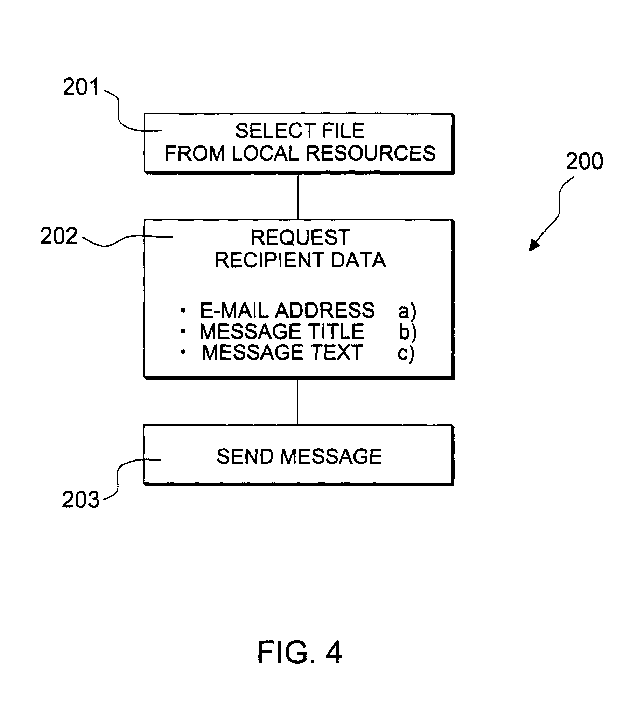

The step 200 is shown in its component steps in Figure 4, in which the step 201 designates the selection of the file that contains Web pages and/or addresses from local resources of the terminal on which the user has saved said file. From there, a step 202 is reached which requests the data of the recipient of the e-mail message to which the file with the Web pages and/or addresses is to be attached.

The recipient data request step 202 requests one or more of:
a) e-mail address;
b) message title;
c) message text.

This is followed by a step 203 which sends the message with the attached file containing the Web pages and/or addresses.

In practice it has been found that the system and the method according to the invention allow to record complete Web pages and/or addresses that the user visits during a search with navigation on the network.

The file thus generated can, at this point, be saved for future viewing. This implies that the user can subsequently reopen the generated file and read the addresses that he saved earlier and/or directly access the Web pages, even offline, if they had been opened previously.

Furthermore, the user has the option of connecting to the data network and of thus opening the Web pages directly online.

The file with the Web pages and/or addresses can be sent over the computer network, for example by using the e-mail service, as an attachment file, and the recipient of the e-mail message can use said file in the same way as the user who initially stored the file on his terminal.

The system and the method thus conceived are susceptible of numerous modifications and variations, all of which are within the scope of the inventive concept; all the details may furthermore be replaced with other technically equivalent elements.

The disclosures in San Marino Patent Application No. SM-A-2000 00028 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system for transmitting data over computer networks, comprising:
data processing means;
storage means controlled by said data processing means;
modulation/demodulation means suitable to provide a connection of said data processing means to a computer network;
data entry means and data display means;
**characterized in that** said storage means comprise a temporary data structure which is suitable to store information related to at least one Web page to be played back subsequently, either online and offline; and
means for generating a data file which is suitable to be stored in said memory means and to contain said information related to said at least one Web page.

2. The system according to claim 1, **characterized in that** said file is a sequential data file.

3. The system according to claim 1, **characterized in that** said file comprises a first record which is suitable to contain general data descriptive data of said file and a plurality of successive records which contain said information related to said at least one Web page to be played back subsequently.

4. The system according to claim 1, **characterized in that** said information stored temporarily in said temporary data structure can be modified and updated.

5. The system according to claim 1, **characterized in that** said information stored in said temporary data structure comprises at least one of the following data:
the title of said at least one Web page;
the address of said at least one page.

6. The system according to claim 5, **characterized in that** said information stored temporarily in said temporary data structure further comprises:
the number of frames that constitute said at least one Web page;
the name and address of the frames that compose said at least one Web page.

7. The system according to claim 3, **characterized in that** said first record contains at least one of the following fields:
file ID;
file title;
file author's name;
file author's e-mail address;
file author's personal URL;
file creation date;
file modification date;
number of Web pages contained in the file.

8. The system according to claim 1, **characterized in that** said temporary data structure comprises a data array.

9. A method for transmitting data over data networks, **characterized in that** it comprises the steps that consist in:
opening a file suitable to store Web pages and subsequently read them, either online and offline;
opening Web pages online;
temporarily storing said opened Web pages; and
saving the file with the stored Web pages.

10. The method according to claim 9, **characterized in that** it comprises a step that consists in sending said file via e-mail over said data network.

11. The method according to claim 9, **characterized in that** said step that consists in storing said opened Web pages comprises the steps consisting in:
storing data related to said Web pages in a temporary data structure which comprises a first record which is suitable to store the identification data of said file and a plurality of subsequent records which are suitable to store identification data of said Web pages opened by the user.

12. The method according to claim 9, **characterized in that** said step for saving said file with the stored Web pages consists in saving said file on local resources of data processing means.
